# EUROPÄISCHE PATENTSCHRIFT

(11) **EP 3 445 631 B1**
(45) Veröffentlichungstag und Bekanntmachung des Hinweises auf die Patenterteilung: **08.07.2020**
(21) Anmeldenummer: 17710940.2
(22) Anmeldetag: 16.03.2017
(51) Int. Cl.: B61G 1/00

(54) **VORRICHTUNG ZUR DATEN- UND/ODER SIGNALÜBERTRAGUNG**
DEVICE FOR DATA AND/OR SIGNAL TRANSMISSION
DISPOSITIF DE TRANSMISSION DE DONNÉES ET/OU DE SIGNAUX

(30) Priorität: 19.04.2016 DE 102016107211
(43) Veröffentlichungstag der Anmeldung: 27.02.2019
(73) Patentinhaber: Voith Patent GmbH, 89522 Heidenheim (DE)
(72) Erfinder: PRILL, Thomas, 30989 Gehrden (DE)
(74) Vertreter: Rupprecht, Kay
(86) Internationale Anmeldenummer: PCT/EP2017/056203
(87) Internationale Veröffentlichungsnummer: WO 2017/182200

(56) Entgegenhaltungen:
- EP-A1- 1 231 724
- EP-A1- 1 455 207
- DE-A1-102006 028 288

## Beschreibung

Die vorliegende Erfindung betrifft ein System mit einem Leuchtenmodul und einer Vorrichtung zur Daten- und/oder Signalübertragung zwischen zwei benachbarten Einheiten eines mehrgliedrigen, spurgeführten Fahrzeugverbundes.

Die Daten- und/oder Signalübertragung zwischen zwei benachbarten, mechanisch miteinander gekoppelten Einheiten eines spurgeführten Fahrzeugverbundes, insbesondere Schienenfahrzeugverbundes, erfolgt derzeit weitgehend über elektrische Kontakte, welche zusammen mit der mechanischen Kupplung geschlossen werden.

Beispielsweise ist aus der Druckschrift EP 0 982 215 B1 eine Elektrokontaktkupplung für automatische Mittelpufferkupplungen bekannt, bei der eine mechanische Mittelpufferkupplung vorgesehen ist, an der eine elektrische Kabelkupplung längsverschiebbar gehalten wird. Die Kabelkupplung weist zumindest eine über eine Anschlussleitung angeschlossene Steckverbindung auf, welche an der Kupplungstrennstelle eines jeden zu kuppelnden Schienenfahrzeuges angeordnet ist. Um eine redundante, symmetrisch zur senkrechten Mittellängsebene der Kupplungsstange angeordnete Kontaktanordnung zu vermeiden und die Kabelkupplung insgesamt einfacher und leichter auszubilden, weist die Kabelkupplung gemäß diesem Stand der Technik ferner einen längsverschiebbaren Adapterkasten auf, der im Kupplungszustand zwischen den jeweiligen Steckverbindungen der gekuppelten Schienenfahrzeuge und im Entkupplungszustand an lediglich einem der jeweiligen Steckverbindungen angeordnet ist. Dieser Adapterkasten enthält die notwendigen elektrischen Verbindungsleitungen zum Verbinden der Anschlussleitungen der zu kuppelnden Schienenfahrzeuge.

Grundproblem bei solchen bekannten Systemen zur Übertragung von Signalen, insbesondere diskreten Steuersignalen, und Datensignalen ist die insbesondere beim Kupplungsvorgang auftretende starke mechanische Beanspruchung der zur Anwendung kommenden elektrischen Kontakte. In Folge von in der Regel automatisiert betriebenen Kupplungsvorgängen, aber auch in Folge von Erschütterungen und Abrieb während des Betriebes sowie in Folge von Umwelteinwirkungen kommt es bei den üblicherweise in Kupplungen eingesetzten herkömmlichen Signalübertragungssystemen zu schleichenden Kontaktschädigungen. Vor allem sind die Kontaktterminals in hohem Maße dem Verschleiß und der Korrosion ausgesetzt. Dies hat unter anderem zur Folge, dass sich der elektrische Widerstand der elektrischen Kontakte bei der Übertragung von Signalen erhöht, was die Qualität der zu übertragenden Signale beeinträchtigt und im Extremfall sogar bis hin zum Komplettausfall der Signalverbindung führen kann.

Bei den herkömmlichen Systemen zur Signalübertragung sind von daher regelmäßige Wartungen und Überprüfungen der in der elektrischen Kupplung vorgesehenen Kontakte notwendig, um eine einwandfreie Signalübertragung gewährleisten zu können. Insbesondere ist es erforderlich, die in der elektrischen oder mechanischen Kupplung verwendeten elektrischen Kontaktterminals regelmäßig zu reinigen und auszutauschen.

Eine Möglichkeit, diese mit der herkömmlichen Übertragung von diskreten Steuersignalen und Datensignalen in Verbindung stehenden Probleme zu umgeben, könnte darin bestehen, die beispielsweise bei einer Elektrokontaktkuppplung häufig zum Einsatz kommende Vielzahl von Einzelsignal-Kontaktterminals möglichst stark zu verringern, was etwa mit einer Bündelung von mehreren Einzelsignal-Kontaktterminals oder unter Anwendung des an sich bekannten Multiplex-Verfahrens erfolgend kann.

Bei einer solchen Lösung kann zwar der für eine einzelne Elektrokontaktkupplung notwendige Gesamt-Verdrahtungsaufwand verringert werden, so dass die Elektrokontaktkupplung an sich gegebenenfalls auch entsprechend kleiner ausgeführt werden kann, allerdings kann das im Zusammenhang mit der beim Kupplungsvorgang auftretenden starken mechanischen Beanspruchung der zur Anwendung kommenden elektrischen Kontakte stehende Grundproblem nicht beseitigt werden. Auch hier unterliegen die zur Anwendung kommenden elektrischen Kontakte insbesondere beim Kupplungsvorgang einer starken mechanischen Beanspruchung und Abnutzung.

Aus der Druckschrift DE 10 2004 037 849 A1 ist ferner eine Zugkupplungseinrichtung bekannt, die eine erste Zugkupplung und eine zweite Zugkupplung aufweist, welche jeweils über eine Wagenbefestigung mit den entsprechenden Wagenkästen des Schienenfahrzeuges verbunden sind. Zwischen dem ersten Schienenfahrzeug und dem zweiten Schienenfahrzeug ist ein berührungslos arbeitendes Übertragungssystem zum Übertragen von Audiosignalen, Videosignalen, Betriebsdaten, Befehlen und/oder anderen Busdaten vorgesehen. Im Einzelnen besteht das Übertragungssystem aus einer ersten HF-Komponente, einer zweiten HF-Komponente, einer ersten Sende-/Empfangseinrichtung und einer zweiten Sende-/Empfangseinrichtung. Die HF-Komponenten sind an oder in der Zugkupplung, vorzugsweise kupplungsstellenseitig, befestig. Die in dieser aus dem Stand der Technik bekannten Signalübertragungsvorrichtung vorgesehenen Antennenelemente sind jeweils in Gestalt einer Patch-Antenne, und insbesondere als oberflächenmontierbare Miniatur-Keramikantenne ausgeführt.

Der Nachteil dieser aus dem Stand der Technik bekannten berührungslos arbeitenden Lösung ist insbesondere in der nur geringen Qualität der Datenübertragung zu sehen. Insbesondere eignet sich eine Patch-Antenne, wie sie bei der herkömmlichen Lösung vorgeschlagen wird, nur in eingeschränkter Weise für eine berührungslose Datenübertragung bei einer automatischen Mittelpufferkupplung, da die Gesamtdämpfung des Signalübertragungssystems relativ hoch ist. Dies macht es zwingend erforderlich, dass der Sendepegel der jeweiligen Patch-Antennen entsprechend hoch gewählt werden muss. Aufgrund der ungünstigen Abstrahlcharakteristik der Patch-Antenne führt allerdings ein relativ hoher Sendepegel zu hohen Störemissionen der einzelnen Antennenelemente.

Bei der aus diesem Stand der Technik bekannten berührungslos arbeitenden Lösung zur Daten- und/oder Signalübertragung ist ein weiterer Nachteil darin zu sehen, dass bei der vorgeschlagenen Patch-Antennenkonfiguration auch die Störfestigkeit der Patch-Antennen, d. h. die Einstrahlungscharakteristik externer Störstrahlung, nicht hinreichend ausgebildet ist. Im praktischen Gebrauch ist bei einem derartigen Signalübertragungssystem unter Umständen nur eine unzuverlässige und störungsanfällige Datenübertragung möglich.

Die gleichen oder zumindest ähnliche Probleme treten im übertragenen Sinne auch für die in der Druckschrift DE 10 2010 045 742 A1 vorgeschlagene Hochfrequenz-Kopplungsteile auf.

Ausgehend von den angesprochenen Nachteilen und Problemen, die im Zusammenhang mit den konventionellen Signalübertragungssystemen bei spurgeführten Fahrzeugen stehen, liegt der vorliegenden Erfindung die Aufgabe zugrunde, eine Vorrichtung zur Daten- und/oder Signalübertragung zwischen zwei benachbarten Einheiten eines mehrgliedrigen, spurgeführten Fahrzeugverbundes anzugeben, welche eine zuverlässige und insbesondere störungsunempfindliche Daten-und/oder Signalübertragung gewährleistet.

Diese Aufgabe wird erfindungsgemäß durch die Gegenstände der nebengeordneten Patentansprüche 1 und 8 gelöst, wobei vorteilhafte Weiterbildungen in den entsprechenden abhängigen Patentansprüchen angegeben sind.

Gemäß Anspruch 1 wird insbesondere vorgeschlagen, dass das erfindungsgemäße System ein Leuchtenmodul, welches zum Einbau in einen Frontbereich eines Fahrzeuges eines mehrgliedrigen spurgeführten Fahrzeugverbundes ausgebildet ist, und eine Vorrichtung zur Daten- und/oder Signalübertragung zwei benachbarten Einheiten des mehrgliedrigen, spurgeführten Fahrzeugverbundes umfasst, wobei die Vorrichtung mindestens einen Emitter zum bedarfsweisen Aussenden von elektromagnetischer Strahlung aufweist, wobei der mindestens eine Emitter in einem Leuchtenmodul integriert ist.

Gemäß Anspruch 8 wird die der Erfindung zugrunde liegende Aufgabe durch ein System gelöst, welches ein Leuchtenmodul, welches zum Einbau in einen Frontbereich eines Fahrzeugs eines mehrgliedrigen spurgeführten Fahrzeugverbundes ausgebildet ist, und eine Vorrichtung zur Daten- und/oder Signalübertragung zwischen zwei benachbarten Einheiten des mehrgliedrigen, spurgeführten Fahrzeugverbundes umfasst, wobei die Vorrichtung mindestens einen Empfänger aufweist zum Empfangen von mit Hilfe eines dem Empfänger zugeordneten Emitters ausgesandter elektromagnetischer Strahlung und zum Umwandeln der empfangenen elektromagnetischen Strahlung in ein Datensignal, wobei der mindestens eine Empfänger in dem Leuchtenmodul integriert ist.

Unter dem hierin verwendeten Begriff "Leuchtenmodul" ist grundsätzlich eine Komponente zu verstehen, welche ausgeführt und ausgebildet ist, um in dem Frontbereich, insbesondere in einer Bugnase, eines spurgeführten Fahrzeuges, wie beispielsweise eines Schienenfahrzeuges, eingebaut zu werden. Zu einem Leuchtenmodul zählen in diesem Zusammenhang - je nach Art und Typ des Fahrzeuges - insbesondere Scheinwerfer/Fernlichter und Kennlichter, wie Signallichter, Schlusslichter, Bremslichter, Fahrtrichtungsanzeiger und dergleichen. Ferner fallen unter dem Begriff "Leuchtenmodule" auch kombinierte Außenleuchten (z. B. Signallicht und Schlusslicht, Fernlicht und Signallicht, Fernlicht und Signallicht und Schlusslicht).

Unter einem Leuchtenmodul soll in diesem Zusammenhang insbesondere eine optische und elektrische Einheit verstanden werden, die eine Anschlussvorrichtung und wenigstens ein Leuchtmittel bzw. Lichtmodul aufweist. Ein Leuchtenmodul ist vorzugsweise ferner mit wenigstens einer Optik (Linse, Objektiv, Blende, Filter, etc.) ausgestattet.

Das Leuchtmittel bzw. Lichtmodul ist grundsätzlich von beliebiger Art, vorzugsweise weist ein Leuchtenmodul ein oder mehrere Leuchtdioden (LEDs) auf. Es können aber auch Halogenlampen, Xenon-Lampen und/oder andere Leuchtmittel eingesetzt werden.

Die vorzugsweise dem Leuchtenmodul zugeordnete Anschlussvorrichtung dient der elektrischen Verbindung mit und/oder der mechanischen Befestigung an und/oder thermischen Kopplung mit einer Trägervorrichtung. Die Anschlussvorrichtung ist hierzu vorzugsweise in Gestalt eines oder mehrerer Stecker bzw. Kontaktelemente ausgebildet.

Die Trägervorrichtung dient insbesondere zum mechanischen Verbinden des Leuchtenmoduls mit dem Frontbereich insbesondere in der Bugnase des spurgeführten Fahrzeuges. Zu diesem Zweck weist die Trägervorrichtung vorzugsweise mehrere Aufnahmen oder Gegenstecker auf, die jeweils zu einem entsprechend komplementär ausgeführten Stecker passen und in denen jeweils ein Leuchtenmodul bzw. seine Anschlussvorrichtungen aufgenommen werden kann.

Einige technische Anforderungen an ein Leuchtenmodul der hierin berücksichtigten Art, wie etwa die Lichtstärke, der Farbort, die Leuchtfläche, etc., sind in entsprechenden Normen geregelt (vgl. z. B. UIC 532, UIC 534 - Stand: Anmeldetag).

Neben diesen vorgeschriebenen Anforderungen haben die Fahrzeughersteller gewisse Freiheiten insbesondere auf Bezug auf das Design des Leuchtenmoduls, aber auch im Hinblick auf die Anordnung und Auslegung der in dem Leuchtenmodul enthaltenen Lichtmodule.

Diese Freiheiten erlauben es insbesondere, dem Leuchtenmodul neben seiner primären Funktion als Scheinwerfer bzw. Fernlicht oder Kennlicht (Signallicht oder Schlusslicht) die Funktion der Daten- und/oder Signalübertragung zuzuteilen, und zwar indem mindestens ein Emitter zum bedarfsweisen Aussenden von Daten und/oder Signalen in Gestalt elektromagnetischer Strahlung in dem Leuchtenmodul integriert wird (und zwar zusätzlich zu dem mindestens einen ohnehin in dem Leuchtenmodul integrierten Lichtmodul und der gegebenenfalls vorgesehenen Optik).

Alternativ oder zusätzlich hierzu ist auch mindestens ein Empfänger der Daten-und/oder Signalübertragungsvorrichtung in dem Leuchtenmodul integriert, wobei dieser mindestens eine Empfänger dazu dient, mit Hilfe eines dem Empfänger zugeordneten Emitters ausgesandte elektromagnetische Strahlung zu empfangen und die empfangene elektromagnetische Strahlung in ein Datensignal umzuwandeln.

Die Integration der zur optischen Daten- und/oder Signalübertragung notwendigen Komponenten, wie insbesondere Emitter und Empfänger, in dem Leuchtenmodul des spurgeführten Fahrzeuges bringt verschiedene Vorteile mit sich.

Da zur Daten- und/oder Signalübertragung eine optische Übertragungsvorrichtung zum Einsatz kommt, entfällt der Bedarf nach hoch spezialisierten Datensteckverbindungen, wie sie bei herkömmlichen Elektrokontaktkupplungen eingesetzt werden mussten. Dadurch können die mechanischen und elektrischen Kupplungen günstiger, robuster und wartungsfreundlicher ausgeführt werden.

Darüber hinaus handelt es sich bei einem Leuchtenmodul, welches als Außenleuchte bei einem spurgeführten Fahrzeug zum Einsatz kommt, um eine bei einem spurgeführten Fahrzeug in der Regel bereits vorhandenen Komponente, die häufig auch bereits vor externen Witterungseinflüssen geschützt ist. Von daher stellt die Integration der optischen Daten- und/oder Signalübertragung bzw. die Verlagerung der optischen Daten- und/oder Signalübertragung in ein Leuchtenmodul des spurgeführten Fahrzeuges eine kostengünstige Lösung dar.

In diesem Zusammenhang ist insbesondere anzumerken, dass derzeit zum Einsatz kommende Leuchtenmodule häufig bereits über Heizeinrichtungen und/oder automatische Reinigungseinrichtungen verfügen, um ein Einschneien/Einfrieren bzw. Verschmutzen des Leuchtenmoduls auch bei widrigen Wetterbedingungen zu vermeiden. Durch die Verlagerung der optischen Daten- und/oder Signalübertragung in ein Leuchtenmodul des spurgeführten Fahrzeuges bleibt auch die optische Daten- und/oder Signalübertragungsvorrichtung bei widrigen Wetterbedingungen bestehen.

Als weiterer Vorteil sind die günstigen optischen Kopplungsverhältnisse bei gekuppelten Fahrzeugeinheiten zu nennen, da der Abstand zwischen zwei gegenüberliegenden Leuchtenmodule, d. h. der Abstand zwischen der Schlussleuchte eines vorausfahrenden, führenden Fahrzeuges zur Spitzenleuchte des folgenden, geführten Fahrzeuges, verhältnismäßig gering ist. Gegebenenfalls auftretende Verschmutzungsprobleme können durch Intensität, Fokussierung und Redundanzkonzepte (d. h. mehrteilig aufgebaute Leuchtenmodule) in einfacher Weise beherrscht werden.

Schließlich sind als weitere Vorteile die günstigeren Eigenschaften hinsichtlich elektromagnetischer Verträglichkeit, insbesondere Störfestigkeit gegenüber Funk-Wireless-Lösungen bzw. Bahnfunk oder funkbasierten Zugsicherungssystemen im Außenbereich genannt.

Weitere Vorteile der erfindungsgemäßen optischen Daten- und/oder Signalübertragung ergeben sich anhand der in den abhängigen Patentansprüchen angegebenen vorteilhaften Weiterbildungen der erfindungsgemäßen Daten- und/oder Signalübertragungsvorrichtung.

Unter dem hierin verwendeten Begriff "Daten- und/oder Signalübertragung" ist insbesondere die optische bzw. berührungslose Übertragung von Audiosignalen, Videosignalen, Betriebsdaten, Befehlen und/oder anderen Busdaten zu verstehen. Hierbei ist der Begriff "optisch" nicht einschränkend auf den für das menschliche Auge wahrnehmbaren Wellenlängenbereich von etwa 400 nm bis ca. 780 nm (sichtbares Licht) beschränkt. Vielmehr betrifft die optische Daten- und/oder Signalübertragung insbesondere langwelligere elektromagnetische Strahlungen, vor allem nahes Infrarot (NIR - 0,78 bis 3,0 µm), kurzwelliges Infrarot (SWIR - 1,4 bis 3 µm) oder gar langwelliges bzw. fernes Infrarot bis hin zur Infrarotstrahlung.

In diesem Zusammenhang ist es somit insbesondere von Vorteil, wenn der mindestens eine Emitter der Daten- und/oder Signalübertragungsvorrichtung eine Laser- und/oder Leuchtdiodenanordnung mit mindestens einer Laser- und/oder Leuchtdiode aufweist, welche in dem Leuchtenmodul des Fahrzeuges integriert ist. Durch die Verwendung von derartigen Laser- und/oder Leuchtdioden als optischer Emitter der Daten- und/oder Signalübertragungsvorrichtung wird - im Vergleich zu herkömmlichen kontaktbasierten Daten- und/oder Signalübertragungsvorrichtungen - die Wartungsintervalle der optischen Daten- und/oder Signalübertragungsvorrichtung deutlich verlängert, so dass sich Standzeiten für das spurgeführte Fahrzeug aufgrund erforderlicher Wartungsarbeiten an der Daten-und/oder Signalübertragungsvorrichtung vermindern.

In diesem Zusammenhang ist es insbesondere von Vorteil, wenn ein Lichtmodul des Leuchtenmoduls, wie beispielsweise ein Fernlichtscheinwerfer und/oder eine Signalleuchte des Leuchtenmoduls, selber von einem Leuchtdiodenfeld gebildet werden/wird. Ein derartiges Leuchtenmodul hätte den Vorteil, dass sich dieses aufgrund der verminderten Wartung auszeichnet.

In einer weiteren Realisierung der erfindungsgemäßen optischen Daten- und/oder Signalübertragungsvorrichtung ist vorgesehen, dass die Vorrichtung mindestens einen dem mindestens einen Emitter zugeordneten elektrooptischen Signalwandler aufweist, um ein Datensignals in ein entsprechendes von dem mindestens einen Emitter zu versendendes elektromagnetisches Signal umzuwandeln. Denkbar in diesem Zusammenhang ist insbesondere, dass zusätzlich hierzu eine dem mindestens einen Empfänger zugeordnete Multiplexer-Einheit vorgesehen ist, um mehrere von dem mindestens einen Emitter zu versendenden Signale zu bündeln. Dadurch kann zur Daten- und/oder Signalübertragung auf an sich bekannte Mehrkanal- bzw. Multiplex-Verfahren zurückgegriffen werden, so dass aufgrund der hohen optischen Kanalbreiten mit der optischen Daten- und/oder Signalübertragungsvorrichtung gegebenenfalls sogar verschiedene Datenströme übertragen werden können.

Von Vorteil ist es ferner, wenn die optische Daten- und/oder Signalübertragungsvorrichtung nicht nur mindestens einen Emitter, sondern zusätzlich hierzu auch mindestens einen Empfänger aufweist, wobei dieser Empfänger ausgebildet ist, ein elektromagnetisches Signal zu empfangen und dieses in ein entsprechendes elektrisches Datensignal umzuwandeln.

In diesem Zusammenhang ist es insbesondere von Vorteil, wenn dem mindestens einen Empfänger der optischen Daten- und/oder Signalübertragungsvorrichtung eine entsprechende Demuliplexer-Einheit zugeordnet ist, um das Auftrennen von mehreren gebündelten Signalen, welche von dem mindestens einen Empfänger als elektromagnetisches Signal empfangen wurden, zu gestatten.

Die vorliegende Erfindung ist jedoch nicht auf Ausführungsformen beschränkt, bei denen die optische Daten- und/oder Signalübertragungsvorrichtung grundsätzlich mindestens einen Emitter (und gegebenenfalls zusätzlich hierzu mindestens einen Empfänger) aufweist. Vielmehr wird gemäß einem weiteren Aspekt der vorliegenden Erfindung eine optische Daten- und/oder Signalübertragungsvorrichtung angegeben, wobei diese Vorrichtung in erster Linie lediglich mindestens eine Empfänger aufweist, der ausgebildet ist, von mit Hilfe eines dem Empfänger zugeordneten Emitters ausgesandte elektromagnetische Strahlung zu empfangen und die empfangene elektromagnetischen Strahlung in ein Datensignal umzuwandeln. Erfindungsgemäß ist bei dieser Ausführungsform vorgesehen, dass der mindestens eine Empfänger in einem Leuchtenmodul integriert ist, welches zum Einbau in einen Frontbereich eines Fahrzeuges eines mehrgliedrigen Fahrzeugverbundes ausgebildet ist.

Der bei der erfindungsgemäßen Daten- und/oder Signalübertragungsvorrichtung zum Einsatz kommende Empfänger weist gemäß bevorzugten Ausführungsformen eine Fotodiodenanordnung mit mindestens einer Fotodiode auf, welche vorzugsweise in einem Leuchtdiodenfeld eines Lichtmoduls (Signallicht, Schlusslicht und/oder Fernlicht) des Leuchtenmoduls integriert ist. Alternativ oder zusätzlich hierzu kann der Empfänger auch als pin-Fotodiode ausgeführt sein. Diese Ausführungsform eignet sich insbesondere für hohe Datenraten.

Der mindestens eine Empfänger der optischen Daten- und/oder Signalübertragungsvorrichtung weist gemäß bevorzugten Ausführungsformen mindestens einen entsprechend zugeordneten elektrooptischen Signalwandler auf, welcher ausgebildet ist, ein von dem mindestens einen Empfänger empfangenes elektromagnetisches Signal in ein entsprechendes Datensignal umzuwandeln. In diesem Zusammenhang ist es denkbar, wenn der elektrooptische Signalwandler eine Signal-/Datenschnittstelle aufweist, über welche der elektrooptische Signalwandler mit einem (fahrzeuginternen) Datenbus verbindbar ist.

In einer bevorzugten Realisierung der erfindungsgemäßen Daten- und/oder Signalübertragungsvorrichtung weist die Vorrichtung mindestens einen Emitter sowie mindestens einen Empfänger auf, wobei diese Komponenten Teil eines Abstandskontrollsystems sind, welches ausgebildet ist, anhand der von dem mindestens einen Empfänger empfangenen elektromagnetischen Strahlung einen Rückschluss auf einen Abstand zu einem zu den mindestens einen Emitter benachbarten Objekt zu treffen.

Für die Abstandsmessung kommen unterschiedliche optische Methoden in Frage. Eine denkbare Methode ist die Lichttriangulation. Hierbei wird mit Hilfe des mindestens einen Emitters der optischen Daten- und/oder Signalübertragungsvorrichtung ein Lichtpunkt, insbesondere ein Laserpunkt, auf das benachbart angeordnete Objekt geworfen und dann mit einer Optik (Linse) auf einen Empfänger der optischen Daten- und/oder Signalübertragungsvorrichtung abgebildet. Der Empfänger ist bei dieser Ausführungsform vorzugsweise als pin-Fotodiodenreihe oder ggf. auch als CCD/PSD-Sensor ausgeführt. Aus dem Auftreffpunkt auf dem Empfänger ergibt sich dann der Abstand des Objektes.

Alternativ zu der Lichttriangulation sei die Interferometrie als Methode zur Abstandsmessung genannt. Bei dieser Methode wird anhand der Laufzeit der von dem mindestens einen Emitter der optischen Daten- und/oder Signalübertragungsvorrichtung ausgesandten Strahlung ein Rückschluss auf den Abstand zu einem benachbart zu dem Emitter angeordneten Objekt getroffen.

Als weitere Methode zur Abstandsmessung sei die Intensitätsmodulation genannt.

Demnach bleibt festzuhalten, dass sich ein Zusatznutzen der Datenübertragungsvorrichtung in dem Leuchtenmodul durch eine mögliche Abstandserfassung beider miteinander gekoppelter Fahrzeuge ergibt, was insbesondere zur Integritätskontrolle des Fahrzeugverbundes zur Erkennung von Zugabriss und Zugtrennung herangezogen werden kann.

Die Erfindung ist nicht nur auf eine optische Daten- und/oder Signalübertragungsvorrichtung der zuvor beschriebenen Art beschränkt, sondern betrifft insbesondere auch ein Leuchtenmodul zum Einbau in einen Frontbereich eines spurgeführten Fahrzeuges, wobei das Leuchtenmodul mindestens einen Fernlichtscheinwerfer und/oder mindestens eine Signalleuchte aufweist, und wobei das Leuchtenmodul mindestens eine optische Daten- und/oder Signalübertragungsvorrichtung der zuvor beschriebenen Art aufweist.

Damit das Leuchtenmodul eine verminderte Wartung benötigt, ist in einer vorteilhaften Weiterbildung vorgesehen, dass der Fernlichtscheinwerfer und/oder die Signalleuchte des Leuchtenmoduls vorzugsweise jeweils von einem Leuchtdiodenfeld gebildet sind/ist. Auf diese Weise kann auf beispielsweise übliche Halogen-Leuchtmittel verzichtet werden. Im Vergleich dazu verfügen Leuchtdiodenfelder über längere Wartungsintervalle, so dass sich Standzeiten für das spurgeführte Fahrzeug aufgrund erforderlicher Wartungsarbeiten vermindern.

Bevorzugt sind bei dem Leuchtenmodul sowohl der Fernlichtscheinwerfer als auch die Signalleuchte jeweils als Leuchtdiodenfeld ausgebildet, wobei diese beiden Leuchtdiodenfelder des Fernlichtscheinwerfers und der Signalleuchte vorzugsweise in einem Abstand zueinander hinter- oder nebeneinander angeordnet sind, wobei der Fernlichtscheinwerfer vorzugsweise hinter der Signalleuchte liegt. Mit dieser Maßnahme lässt sich eine besonders günstige Integration des Leuchtenmoduls in die Bugnase bzw. in den Frontbereich insbesondere eines Hochgeschwindigkeitszuges erzielen, wobei außerdem Vorgaben für die Beleuchtung des spurgeführten Fahrzeuges (hier: Schienenfahrzeuges) erfüllt werden.

Zur Optimierung der Leuchtdichte ist es ferner günstig, wenn das Leuchtdiodenfeld der Signalleuchte nach innen gekrümmt ist.

In vorteilhafter Weise weist das Leuchtenmodul eine von außen demontierbare Abdeckscheibe auf. Dies ermöglicht bei Bedarf einen einfachen Austausch der Leuchtdiodenfelder oder anderer Komponenten des Leuchtenmoduls im Wartungsfall.

Nachfolgend werden unter Bezugnahmen auf die beiliegenden Zeichnungen exemplarische Ausführungsformen der erfindungsgemäßen Lösung näher beschrieben:
Es zeigen:
- FIG. 1: eine Vorderansicht des Frontbereiches eines spurgeführten Fahrzeuges, wobei der Frontbereich beidseitig mit einem Leuchtenmodul ausgestattet ist;
- FIG. 2: schematisch eine Detailansicht eines Leuchtenmoduls, welches in dem Frontbereich des spurgeführten Fahrzeuges gemäß FIG. 1 einsetzbar ist;
- FIG. 3: schematisch eine exemplarische Ausführungsform einer optischen Daten- und/oder Signalübertragungsvorrichtung, welches in dem Leuchtenmodul gemäß FIG. 2 integriert ist; und
- FIG. 4: schematisch eine optische Daten- und/oder Signalübertragung zwischen zwei benachbarten Einheiten eines mehrgliedrigen, spurgeführten Fahrzeugverbundes.

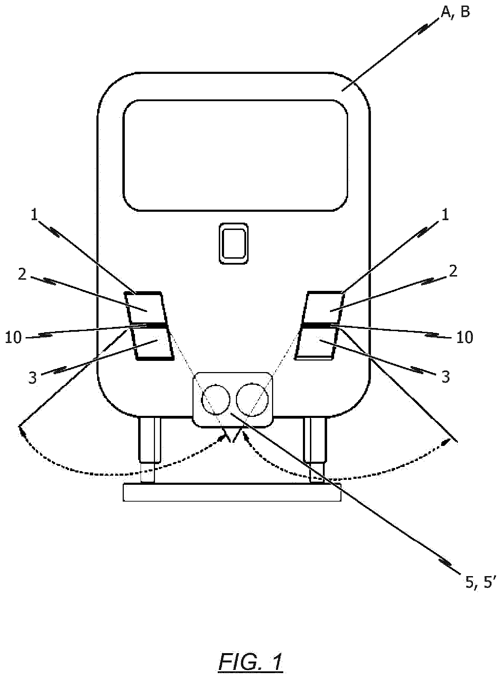

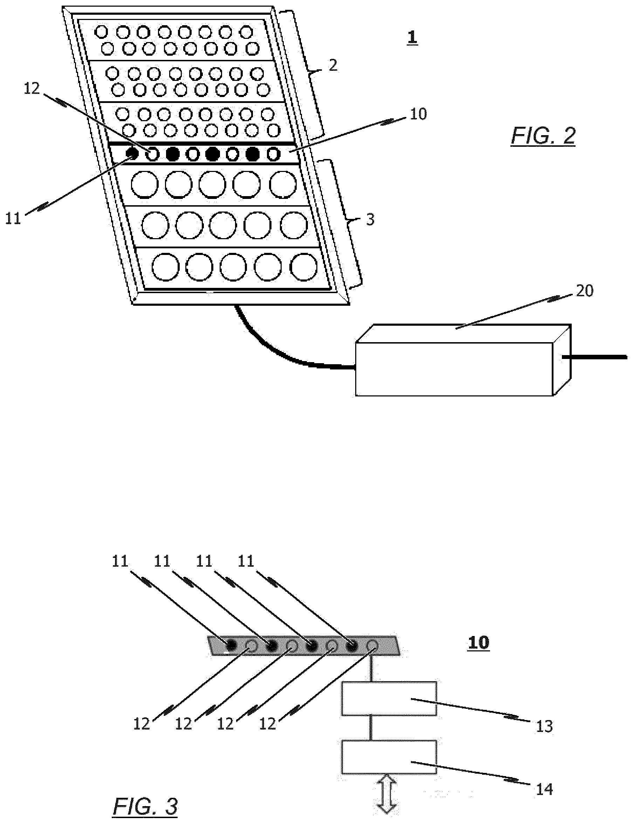

Der in FIG. 1 schematisch dargestellte Frontbereich eines spurgeführten Fahrzeuges, insbesondere Schienenfahrzeuges, zeigt beidseitig ein jeweiliges Leuchtenmodul 1, das nachstehend insbesondere unter Bezugnahme auf die Darstellungen in FIG. 2 weiter beschrieben wird. Das Leuchtenmodul 1 weist ein unteres Lichtmodul 3 für einen Fernlichtscheinwerfer sowie ein oberes Lichtmodul 2 für eine Signalleuchte auf.

Die beiden Lichtmodule 2, 3 des jeweiligen Leuchtenmoduls 1 sind vorzugsweise im Wesentlichen einheitlich zueinander ausgestaltet. Das heißt, sie haben im Wesentlichen die gleiche Größe, die gleiche Form, eine gleich dimensionierte und geformte Leuchtfläche, den gleichen Abstrahlwinkel und dergleichen. Diese Einheitlichkeit der Lichtmodule 2, 3 kann vorzugsweise auch nur innerhalb von Teilgruppen der Lichtmodule 2, 3 gelten, mit anderen Worten kann es ein, zwei oder mehr Arten/Unterarten/Typen von Lichtmodulen 2, 3 zum Aufbau eines Leuchtenmoduls 1 geben.

Weiter haben die Lichtmodule 2, 3, insbesondere die Lichtmodule einer Teilgruppe, vorzugweise jeweils den gleichen Farbort und/oder den gleichen Abstrahlwinkel, den das Leuchtenmodul 1 haben soll. In FIG. 1 sind die Abstrahlwinkel bzw. die sich mit den Leuchtenmodulen 1 ergebenden Ausleuchtungswinkel entsprechend angedeutet.

In der in FIG. 1 dargestellten Ausführungsform kommt als Leuchtenmodul 1 eine kombinierte Außenleuchte zum Einsatz bestehend aus einem Fernlichtscheinwerfer (unteres Lichtmodul 3) und einer Signalleuchte bzw. Kennlicht (oberes Lichtmodul 2). Selbstverständlich ist es aber auch denkbar, wenn bei dem Leuchtenmodul 1 nur ein einziges Lichtmodul zum Einsatz kommt, welches zwischen zwei Betriebsarten entsprechend umgeschaltet werden kann.

Des Weiteren können die Lichtmodule 2, 3 vorzugsweise in (wenigstens) zwei Betriebsarten betrieben werden, beispielsweise ungedimmt und gedimmt. Auf diese Weise können beispielsweise der Fernlichtscheinwerfer (unteres Lichtmodul 3) und die Signalleuchte (oberes Lichtmodul 2) jeweils auch als Abblendlicht mit reduzierter Lichtstärke betrieben werden.

Anhand der detaillierten Darstellung in FIG. 2 ist erkennbar, dass die in dem Frontbereich des spurgeführten Fahrzeuges gemäß FIG. 1 zum Einsatz kommenden Leuchtenmodule 1 jeweils als Leuchtdiodenfelder ausgeführte Lichtmodule 2, 3 aufweisen, nämlich ein oberes Leuchtdiodenfeld für die Signalleuchte und ein unteres Leuchtdiodenfeld für den Fernlichtscheinwerfer.

Ferner ist der Darstellung in FIG. 2 zu entnehmen, dass die Leuchtdiodenfelder der Signalleuchte und des Fernlichtscheinwerfers in einem Abstand zueinander nebeneinander bzw. übereinander angeordnet sind, wobei das Leuchtdiodenfeld der Signalleuchte von vorn gesehen oberhalb des Leuchtdiodenfeldes für den Fernlichtscheinwerfer angeordnet sind.

In dem Bereich zwischen dem Leuchtdiodenfeld für die Signalleuchte und dem Leuchtdiodenfeld für den Fernlichtscheinwerfer ist bei den in den Zeichnungen dargestellten exemplarischen Ausführungsformen eine optische Daten- und/oder Signalübertragungsvorrichtung 10 vorgesehen. Diese besteht aus mehreren Emittern 11 zum bedarfsweisen Aussenden von elektromagnetischer Strahlung sowie mehreren Empfängern 12, welche ausgebildet sind, die von einem Emitter 11 ausgesandte elektromagnetische Strahlung zu empfangen. Bei der in beispielsweise FIG. 2 dargestellten Ausführungsform sind die Emitter 11 und Empfänger 12 alternierend zueinander angeordnet. Selbstverständlich kommen aber auch andere Anordnungen in Frage.

Das in FIG. 2 schematisch dargestellte Leuchtenmodul 1 weist ferner eine Steuereinrichtung 20 auf, um die entsprechenden Leuchtdiodenfelder des Leuchtenmoduls 1 geeignet anzusteuern.

Vorzugsweise ist in der Steuereinrichtung 20 des Leuchtenmoduls 1 auch die der optischen Daten- und/oder Signalübertragungsvorrichtung 10 zugeordnete Steuerung untergebracht. Hierzu gehört insbesondere ein den Emittern 11 der optischen Daten- und/oder Signalübertragungsvorrichtung 10 zugeordneter elektrooptischer Signalwandler, ein den Empfängern 12 der optischen Daten- und/oder Signalübertragungsvorrichtung 10 zugeordneter elektrooptischer Signalwandler, eine dem Emittern 11 der optischen Daten- und/oder Signalübertragungsvorrichtung 10 zugeordnete Multiplexer-Einheit und/oder eine den Empfängern 12 der optischen Daten- und/oder Signalübertragungsvorrichtung 10 zugeordnete Demultiplexer-Einheit.

Die jeweiligen Emitter 11 der optischen Daten- und/oder Signalübertragungsvorrichtung 10 sind vorzugsweise als Laserdioden und/oder LEDs, insbesondere Infrarot-LEDs ausgeführt. Vorzugsweise arbeiten die Emitter 11 im nicht sichtbaren Frequenzbereich, um jedwede Störungen bei der konventionellen Fahrzeugleuchte/dem konventionellen Leuchtenmodul 1 zu vermeiden.

Die entsprechenden Empfänger 12 der optischen Daten- und/oder Signalübertragungsvorrichtung 10 sind somit Fotodioden bzw. pin-Fotodioden, deren Empfindlichkeit angepasst ist an den Frequenzbereich der Emitter 11 der optischen Daten- und/oder Signalübertragungsvorrichtung 10.

Wie es der Darstellung in FIG. 3 entnommen werden kann, weist die dort schematisch dargestellte optische Daten- und/oder Signalübertragungsvorrichtung 10 (= optische Transceiver-Einheit) als Emitter 11 eine LED-Anordnung zum Datensenden, als Empfänger 12 eine Fotodiodenanordnung zum Datenempfang und eine Umsetzereinheit 13 zur Hin-/Rückwandlung eines standardisierten Datensignals in ein entsprechend hochfrequentes Lichtsignal auf.

Eine Datenschnittstelleneinheit 14 verbindet die optische Daten- und/oder Signalübertragungsvorrichtung 10 mit einem standardisierten Datenbusanschluss. Durch diese optische Daten- und/oder Signalübertragungsvorrichtung 10 ist bereits eine vollständige Datenübertragung innerhalb eines zu definierenden Abstandes zwischen zwei benachbarten Einheiten eines mehrgliedrigen Fahrzeugverbundes möglich.

Auch die Integration einer Abstandskontrolle zur Integrationskontrolle der beiden gekuppelten Fahrzeugeinheiten/Fahrzeugteile in die optische Daten- und/oder Signalübertragungsvorrichtung 10 ist denkbar und würden zusätzlichen Mehrwert generieren.

Als Datenbusanschluss kommt beispielsweise ein drahtgebundener Ethernet-Gigabit-LINK (z. B. 1000 BASE-T, IEEE802.2 Clause 40) zum Einsatz.

Die Stromversorgung der optischen Daten- und/oder Signalübertragungsvorrichtung 10 erfolgt vorzugsweise mittels PoE (Power-over-Ethernet) über den Datenbusanschluss selbst. Dieser kann optional auch lichtleitergebunden oder funkbasiert ("wireless") ausgelegt werden. Hierdurch kann dann unmittelbar eine Kopplung an andere digitale Datenübertragungsmedien erfolgen.

Wie bereits ausgeführt, besteht die den Empfänger 12 der optischen Daten-und/oder Signalübertragungsvorrichtung 10 bildende LED-Anordnung zweckmäßigerweise aus Infrarot-Leuchtmitteln, um das durch die Spitzen- und Schlussleuchte des Fahrzeuges erzeugte (sichtbare) Spektrum nicht negativ zu beeinflussen, da Kennwerte, wie Lichtstärke und Farbort, bei Fahrzeugleuchten in der Regel normativen Anforderungen unterliegen.

Eine bevorzugte Ausführungsform für die LED-Anordnung besteht in der Verwendung von Laserdioden (kohärente Lichtquellen) anstelle von LEDs, da hiermit eine hohe Strahlungsintensität und eine gute Richtwirkung erzielt werden kann. Für diese Anwendung kommen zweckmäßigerweise Laserdioden der Laserklasse 1 zum Einsatz, um hier höchstmögliche Sicherheit des Betriebspersonals zu gewährleisten. Die Datenübermittlung bei Laserdioden erfolgt durch Modulation der Lichtintensität um einen spezifischen Arbeitspunkt (BIAS-T) innerhalb einer Umsetzereinheit 13.

Wie in FIG. 1 angedeutet, sind die Leuchtenmodule 1, in denen die erfindungsgemäße optische Daten- und/oder Signalübertragungsvorrichtung 10 integriert sind, jeweils in Fahrtrichtung rechts und in Fahrtrichtung links angeordnet. Die Ausleuchtungswinkel der Leuchtenmodule 1 sind so gewählt, dass stets eine ausreichende optische Kopplung zwischen den Emittern 11 und den Empfängern 12 zur zuverlässigen Datenübertragung, insbesondere in Gleisbögen (Kurvenfahrten) gegeben ist.

Zusätzlich ist durch die gezielte Anordnung der Leuchtenmodule 1 Redundanz bezüglich der Datenkommunikation gegeben, da die Übertragungseinrichtungen (Emitter 11 und Empfänger 12) der optische Daten- und/oder Signalübertragungsvorrichtung 10 doppelt vorhanden sind. Die zugseitige Zusammenführung beiden Datensignale zu einem physikalischen Kanal kann zweckmäßigerweise über einen geeigneten Ethernet-Switch (z. B. RST-Protokoll "rapid-spanning-tree") erfolgen.

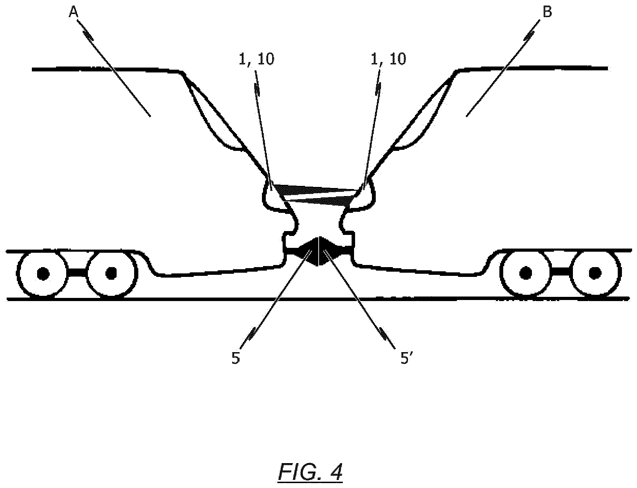

In FIG. 4 sind zwei miteinander über entsprechende Mittelpufferkupplungen 5, 5' mechanisch miteinander gekuppelte Triebzüge A, B eines mehrgliedrigen Fahrzeugverbundes dargestellt, wobei der rechte (führende) Triebzug A über sein Leuchtenmodul 1 (hier: Schlussleuchte) mit dem linken (geführten) Fahrzeug B über das dem Fahrzeug B zugeordneten Leuchtenmodul 1 (hier: Spitzenleuchte) Daten austauscht. Die Datenkommunikation läuft dabei bidirektional (zweikanalig) über die optischen Signale ab.

Die mit der erfindungsgemäßen Lösung erzielbaren Vorteile sind nachfolgend noch einmal wie folgt zusammengefasst:
- Entfall von hochspezialisierten Datensteckverbindungen in der elektrischen Zugkupplung; dadurch können elektrischen Zugkupplungen günstiger, robuster und wartungsfreundlicher ausgeführt werden.
- Kostengünstige Verlagerung der Datenübertragung in die in jedem Schienenfahrzeug vorhandene vor externen Witterungseinflüssen geschützte Zugbeleuchtung.
- Durch Mehrkanal- bzw. Multiplexverfahren können aufgrund der sehr hohen optischen Kanalbandbreiten gegebenenfalls sogar verschiedene Datenströme gebündelt übertragen werden.
- Günstige optische Kopplungsverhältnisse bei gekuppelten Zugeinheiten, da der Abstand Schlussleuchte (vorausfahrendes, führendes Fahrzeug) zur Spitzenleuchte (folgendes, geführtes Fahrzeug) verhältnismäßig gering ist; dadurch können Verschmutzungsprobleme durch Intensität, Fokussierung und Redundanzkonzepte (d. h. mehrteilige Zugleuchten) beherrscht werden.
- LED-Zugleuchten verfügen in der Regel über Heizungseinrichtungen, die ein Einschneien und Einfrieren der Leuchten vermeiden. Dadurch bleibt die optische Kopplung auch bei widrigen Wetterbedingungen bestehen.
- Günstigere Eigenschaften hinsichtlich elektromagnetischer Verträglichkeit, insbesondere Störfestigkeit gegenüber Funk-Wireless Lösungen bzw. Bahnfunk oder funkbasierten Zugsicherungssystemen im Außenbereich.
- Ein Zusatznutzen der Datenübertragungseinrichtung in der Zugleuchte ergibt sich durch eine mögliche Abstandserfassung (insbesondere DopplerEffekt) beider Zugteile zur Integritätskontrolle des Zugverbandes zur Erkennung von Zugtrennung und Zugabriss.

Die bei der Daten- und/oder Signalübertragung gemäß FIG. 4 zum Einsatz kommenden Leuchtenmodule 1 sind als Außenlichtanordnung ausgeführt und enthalten in diesem Ausführungsbeispiel zwei Außenleuchten: einen Fernlichtscheinwerfer als erste Außenleuchte und ein Kennlicht (z. B. weißes Signallicht oder rotes Schlusslicht) als zweiten Außenleuchte. Die beiden Außenleuchten sind in einem Leuchtengehäuse hinter einer Leuchtenabdeckung angeordnet, welche zumindest teilweise transparent ausgestaltet und vorzugsweise lösbar angebracht ist. Es ist natürlich auch möglich, die erste Außenleuchte als Kennlicht und zweite Außenleuchte als Scheinwerfer auszubilden oder eine Außenlichtanordnung mit nur einer Außenleuchte (Scheinwerfer oder Kennlicht) vorzusehen.

Der Lichtaustrittswinkel des Fernlichtscheinwerfers ist nach Möglichkeit nach unten nicht durch Wandungen oder dergleichen begrenzt. Dies gestattet es, dass der Fernlichtscheinwerfer unter Berücksichtigung der besonderen Bedingungen im Bereich der Bugnase des spurgeführten Fahrzeuges einen geeigneten, den Vorschriften entsprechenden Lichtkegel erzeugt.

Die Lichtmodule 2, 3 der Außenleuchte werden über die Bordspannung des spurgeführten Fahrzeuges mit Energie versorgt.

Die Erfindung ist nicht auf die in den Zeichnungen dargestellten Ausführungsformen beschränkt, sondern ergibt sich aus einer Zusammenschau sämtlicher hierin offenbarter Merkmale, solange sie durch die beiliegenden Ansprüche gedeckt ist.

## Patentansprüche

1. System mit einem Leuchtenmodul (1), welches zum Einbau in einen Frontbereich eines Fahrzeuges (A, B) eines mehrgliedrigen spurgeführten Fahrzeugverbundes ausgebildet ist, und einer Vorrichtung (10) zur Daten-und/oder Signalübertragung zwischen zwei benachbarten Einheiten des mehrgliedrigen, spurgeführten Fahrzeugverbundes, wobei die Vorrichtung (10) mindestens einen Emitter (11) zum bedarfsweisen Aussenden von elektromagnetischer Strahlung aufweist, wobei der mindestens eine Emitter (11) in dem Leuchtenmodul (1) integriert ist.

2. System nach Anspruch 1,
wobei der mindestens eine Emitter (11) eine Laser- und/oder Leuchtdiodenanordnung mit mindestens einer Laser- und/oder Leuchtdiode aufweist, welche vorzugsweise Teil eines Leuchtdiodenfeldes eines Lichtmodules (2, 3) des Leuchtenmoduls (1) ist.

3. System nach Anspruch 1 oder 2,
wobei die Vorrichtung (10) mindestens einen dem mindestens einen Emitter (11) zugeordneten elektrooptischen Signalwandler (13) aufweist zum Umwandeln eines Datensignals in ein entsprechendes von dem mindestens einen Emitter (11) zu versendendes elektromagnetisches Signal.

4. System nach einem der Ansprüche 1 bis 3,
wobei die Vorrichtung (10) mindestens eine dem mindestens einen Emitter (11) zugeordnete Multiplexer-Einheit aufweist zum Bündeln von mehreren von dem mindestens einen Emitter (11) zu versendenden Signalen.

5. System nach einem der Ansprüche 1 bis 4,
wobei die Vorrichtung (10) ferner mindestens einen Empfänger (12) aufweist zum Empfangen und Umwandeln eines elektromagnetischen Signals in ein entsprechendes elektrisches Datensignal.

6. System nach Anspruch 5,
wobei die Vorrichtung (10) mindestens eine dem mindestens einen Empfänger (12) zugeordnete Demuliplexer-Einheit aufweist zum Auftrennen von mehreren gebündelten Signalen, die von dem mindestens einen Empfänger (12) als elektromagnetisches Signal empfangen wurden.

7. System nach Anspruch 5 oder 6,
wobei der mindestens eine Empfänger (12) Teil eines Abstandskontrollsystems und vorzugsweise ausgebildet ist, zumindest einen Teil der von dem mindestens einen Emitter (11) ausgesandten elektromagnetischen Strahlung zu empfangen, wobei das Abstandskontrollsystem ausgebildet ist, anhand der von dem mindestens einen Empfänger (12) empfangenden elektromagnetischen Strahlung einen Rückschluss auf einen Abstand zu einem zu dem mindestens einen Emitter (11) benachbarten Objekt zu treffen.

8. System mit einem Leuchtenmodul (1), welches zum Einbau in einen Frontbereich eines Fahrzeuges (A, B) eines mehrgliedrigen spurgeführten Fahrzeugverbundes ausgebildet ist, und einer Vorrichtung (10) zur Daten-und/oder Signalübertragung zwischen zwei benachbarten Einheiten des mehrgliedrigen, spurgeführten Fahrzeugverbundes, wobei die Vorrichtung (10) mindestens einen Empfänger (12) aufweist zum Empfangen von mit Hilfe eines dem Empfänger (12) zugeordneten Emitters (11) ausgesandter elektromagnetischer Strahlung und zum Umwandeln der empfangenden elektromagnetischen Strahlung in ein Datensignal, wobei der mindestens eine Empfänger (12) in dem Leuchtenmodul (1) integriert ist.

9. System nach einem der Ansprüche 5 bis 8,
wobei der mindestens eine Empfänger (12) eine Anordnung mit mindestens einer Fotodiode und/oder einer pin-Fotodiode aufweist, welche bzw. welcher vorzugsweise in einem Leuchtdiodenfeld eines Lichtmoduls (2, 3) des Leuchtenmoduls (1) ausgeführt ist.

10. System nach einem der Ansprüche 5 bis 9,
wobei die Vorrichtung (10) mindestens einen dem mindestens einen Empfänger (12) zugeordneten elektrooptischen Signalwandler (13) aufweist zum Umwandeln eines von dem mindestens einen Empfänger (12) empfangenen elektromagnetischen Signals in ein entsprechendes Datensignal.

11. System nach Anspruch 10,
wobei der elektrooptische Signalwandler (13) eine Signal-/Datenschnittstelle (14) aufweist, über welche der elektrooptische Signalwandler (13) mit einem Datenbus verbindbar ist.

12. System nach einem der Ansprüche 1 bis 11,
wobei das Leuchtenmodul (1) mindestens einen Fernlichtscheinwerfer und/oder mindestens eine Signalleuchte aufweist.

13. System nach Anspruch 12,
wobei der mindestens eine Fernlichtscheinwerfer und/oder die mindestens eine Signalleuchte zumindest teilweise von einem Leuchtdiodenfeld gebildet werden/wird.

14. System nach Anspruch 12 oder 13,
wobei das Leuchtenmodul (1) als Teil einer Außenlichtanordnung oder als Außenlichtanordnung selber ausgebildet ist.

## Claims

1. A system comprising a lamp module (1) designed to be installed in a front region of a vehicle (A, B) of a multi-membered track-guided vehicle combination and a device (10) for data and/or signal transmission between two adjacent units of the multi-membered, track-guided vehicle combination, wherein the device (10) comprises at least one emitter (11) for emitting electromagnetic radiation as needed, wherein the at least one emitter (11) is integrated into the lamp module (1).

2. The system according to claim 1,
wherein the at least one emitter (11) comprises a laser and/or light-emitting diode array having at least one laser and/or light-emitting diode which is preferably part of an LED array of a light module (2, 3) of the lamp module (1).

3. The system according to claim 1 or 2,
wherein the device (10) comprises at least one electro-optical signal converter (13) allocated to the at least one emitter (11) for converting a data signal into a corresponding electromagnetic signal to be sent by the at least one emitter (11).

4. The system according to one of claims 1 to 3,
wherein the device (10) comprises at least one multiplexer unit allocated to the at least one emitter (11) for multiplexing multiple signals to be sent by the at least one emitter (11).

5. The system according to one of claims 1 to 4,
wherein the device (10) further comprises at least one receiver (12) for receiving and converting an electromagnetic signal into a corresponding electrical data signal.

6. The system according to claim 5,
wherein the device (10) comprises at least one demultiplexer unit allocated to the at least one receiver (12) for separating multiple bundled signals received by the at least one receiver (12) as an electromagnetic signal.

7. The system according to claim 5 or 6,
wherein the at least one receiver (12) is part of a distance control system and preferably designed to receive at least a portion of the electromagnetic radiation emitted by the at least one emitter (11), wherein the distance control system is designed to conclude, on the basis of the electromagnetic radiation received by the at least one receiver (12), a distance to an object adjacent to the at least one emitter (11).

8. A system comprising a lamp module (1) designed to be installed in a front region of a vehicle (A, B) of a multi-membered track-guided vehicle combination and a device (10) for data and/or signal transmission between two adjacent units of a multi-membered, track-guided vehicle combination, wherein the device (10) comprises at least one receiver (12) for receiving electromagnetic radiation emitted by means of an emitter (11) associated with the receiver (12) and for converting the received electromagnetic radiation into a data signal, wherein the at least one receiver (12) is integrated into the lamp module (1).

9. The system according to one of claims 5 to 8,
wherein the at least one receiver (12) comprises an assembly having at least one photodiode and/or one PIN-photodiode which is/are preferably implemented in an LED array of a light module (2, 3) of the lamp module (1).

10. The system according to one of claims 5 to 9,
wherein the device (10) comprises at least one electro-optical signal converter (13) allocated to the at least one receiver (12) for converting an electromagnetic signal received by the at least one receiver (12) into a corresponding data signal.

11. The system according to claim 10,
wherein the electro-optical signal converter (13) comprises a signal/data interface (14) via which the electro-optical signal converter (13) can be connected to a data bus.

12. The system according to one of claims 1 to 11,
wherein the lamp module (1) comprises at least one main beam headlight and/or at least one signal light.

13. The system according to claim 12,
wherein the at least one main beam headlight and/or the at least one signal light is/are at least partially formed by an LED array.

14. The system according to claim 12 or 13,
wherein the lamp module (1) is designed as part of an exterior light assembly or is itself formed as an exterior light assembly.

## Revendications

1. Système comportant un module d'éclairage (1), qui est réalisé pour être installé dans une zone frontale d'un véhicule (A, B) d'une combinaison de véhicules à plusieurs unités guidée sur rails, et un dispositif (10) pour la transmission de données et/ou de signaux entre deux unités voisines de la combinaison de véhicules à plusieurs unités guidée sur rails, le dispositif (10) comprenant au moins un émetteur (11) pour émettre un rayonnement électromagnétique en cas de besoin, ledit au moins un émetteur (11) étant intégré dans le module d'éclairage (1).

2. Système selon la revendication 1,
dans lequel
ledit au moins un émetteur (11) comprend un ensemble de diode laser et/ou électroluminescente comportant au moins une diode laser et/ou électroluminescente qui fait de préférence partie d'un champ de diodes électroluminescentes d'un module lumineux (2, 3) du module d'éclairage (1).

3. Système selon la revendication 1 ou 2,
dans lequel
le dispositif (10) comprend au moins un convertisseur de signal électro-optique (13) associé audit au moins un émetteur (11) pour convertir un signal de données en un signal électromagnétique correspondant à émettre par ledit au moins un émetteur (11).

4. Système selon l'une des revendications 1 à 3,
dans lequel
le dispositif (10) comprend au moins une unité de multiplexage associée audit au moins un émetteur (11) pour regrouper plusieurs signaux à émettre par ledit au moins un émetteur (11).

5. Système selon l'une des revendications 1 à 4,
dans lequel
le dispositif (10) comprend au moins un récepteur (12) pour recevoir et convertir un signal électromagnétique en un signal de données électrique correspondant.

6. Système selon la revendication 5,
dans lequel
le dispositif (10) comprend au moins une unité de démultiplexage associée audit au moins un récepteur (12) pour séparer plusieurs signaux regroupés reçus comme signal électromagnétique par ledit au moins un récepteur (12).

7. Système selon la revendication 5 ou 6,
dans lequel
ledit au moins un récepteur (12) fait partie d'un système de contrôle de distance et est de préférence réalisé pour recevoir une partie au moins du rayonnement électromagnétique émis par ledit au moins un émetteur (11), le système de contrôle de distance étant réalisé pour conclure, à partir du rayonnement électromagnétique reçu par ledit au moins un récepteur (12), quant à une distance par rapport à un objet voisin dudit au moins un émetteur (11).

8. Système comportant un module d'éclairage (1), qui est réalisé pour être installé dans une zone frontale d'un véhicule (A, B) d'une combinaison de véhicules à plusieurs unités guidée sur rails, et un dispositif (10) pour la transmission de données et/ou de signaux entre deux unités voisines de la combinaison de véhicules à plusieurs unités guidée sur rails, le dispositif (10) comprenant au moins un récepteur (12) pour recevoir un rayonnement électromagnétique émis à l'aide d'un émetteur (11) associé au récepteur (12) et pour convertir le rayonnement électromagnétique reçu en un signal de données, ledit au moins un récepteur (12) étant intégré dans le module d'éclairage (1).

9. Système selon l'une des revendications 5 à 8,
dans lequel
ledit au moins un récepteur (12) comprend un ensemble ayant au moins une photodiode et/ou une photodiode PIN qui est réalisé(e) de préférence dans un champ de diodes électroluminescentes d'un module lumineux (2, 3) du module d'éclairage (1).

10. Système selon l'une des revendications 5 à 9,
dans lequel
le dispositif (10) comprend au moins un convertisseur de signal électro-optique (13) associé audit au moins un récepteur (12) pour convertir un signal électromagnétique reçu par ledit au moins un récepteur (12) en un signal de données correspondant.

11. Système selon la revendication 10,
dans lequel
le convertisseur de signal électro-optique (13) comprend une interface signal/données (14) par laquelle le convertisseur de signal électro-optique (13) peut être connecté à un bus de données.

12. Système selon l'une des revendications 1 à 11,
dans lequel
le module d'éclairage (1) comprend au moins un projecteur à longue portée et/ou au moins un feu de signalisation.

13. Système selon la revendication 12,
dans lequel
ledit au moins un projecteur à longue portée et/ou ledit au moins un feu de signalisation est/sont formé(s) au moins partiellement par un champ de diodes électroluminescentes.

14. Système selon la revendication 12 ou 13,
dans lequel
le module d'éclairage (1) est réalisé de manière à faire partie d'un ensemble d'éclairage extérieur ou est réalisé lui-même sous forme d'ensemble d'éclairage extérieur.
